# EUROPÄISCHE PATENTSCHRIFT

(11) **EP 2 003 388 B1**
(45) Veröffentlichungstag und Bekanntmachung des Hinweises auf die Patenterteilung: **25.02.2015**
(21) Anmeldenummer: 08010677.6
(22) Anmeldetag: 12.06.2008
(51) Int. Cl.: F16L 59/02, F16L 59/065, F16L 59/14, B32B 15/08, E04B 1/78

(54) **Wärmedämmender Dämmkörper und Verfahren zum Herstellen eines Dämmkörpers**
Heat insulating body and method for producing same
Element d'isolation calorifuge et procédé de fabrication d'un tel élément

(30) Priorität: 14.06.2007 DE 102007027466
(43) Veröffentlichungstag der Anmeldung: 17.12.2008
(73) Patentinhaber: Luther, Joachim, 38690 Vienenburg (DE); Technische Universität Clausthal, 38678 Clausthal-Zellerfeld (DE)
(72) Erfinder: Luther, Joachim, 38690 Vienenburg (DE); Ziegmann, Gerhard Prof.Dr., 38678 Clausthal-Zellerfeld (DE); Niemeyer, Sonja, 38678 Clausthal-Zellerfeld (DE)
(74) Vertreter: Höfer, Friederike

(56) Entgegenhaltungen:
- FR-A1- 2 801 367
- US-A- 3 264 165
- US-A- 4 340 630
- US-A1- 2002 147 242

## Beschreibung

Die Erfindung bezieht sich auf einen wärmedämmenden Dämmkörper mit den oberbegrifflichen Merkmalen gemäß Patentanspruch 1 und auf ein Verfahren zum Herstellen eines Dämmkörpers.

Um einen gegen Wärmeaustausch abzuschirmenden Körper zu schützen, sind Dämmkörper mit einer wärmedämmenden Eigenschaft bekannt. Einfache Dämmkörper zum Abschirmen beispielsweise einer Rohrleitung bestehen beispielsweise aus einem Fasermaterial, z.B. Steinwolle oder Glaswolle, welches zum Ummanteln der Rohrleitung um die Rohrleitung gelegt wird. Oftmals sind dabei Lagen aus einem solchen Fasermaterial von einer Folie umgeben, welche nach außen hin einen Schutz gegen eindringende Feuchtigkeit bietet.

Allgemein bekannt ist als ein hoch wärmedämmender Dämmkörper eine Konstruktion aus einer Dämmkörperwandung, welche einen Stützkörper umschließt. Die Dämmkörperwandung umgibt dabei einen Zwischenraum, in welchem der Stützkörper angeordnet ist. Die Herstellung erfolgt dadurch, dass ein Stützkörper aus einem vorzugsweise hochpermeablen Material von einer Folie als der Dämmkörperwandung umgeben wird und anschließend der Zwischenraum zwischen der Dämmkörperwandung evakuiert wird. Wärmeleitung kann daher nur noch über das Material des Stützkörpers erfolgen. Die Dämmkörperwandung besteht dabei üblicherweise aus einer Kunststofffolie. Nachteilhaft ist bei solchen Anordnungen jedoch, dass es sich um flächige plattenförmige Dämmkörper handelt, welche zum Abschirmen einer runden Rohrleitung nicht einsetzbar sind.

So ist beispielsweise aus der DE 10 2006 028 422 A1 ein Isolationspaneel sowie ein Verfahren zu seiner Herstellung bekannt. Es handelt sich um ein Vakuum-Isolations-Element, bei dem ein inneres Bauteil mehrere Hohlräume aufweist und mit einer Hülle versehen ist, wobei die Hülle aus einem thermoplastischen Werkstoff aus nachwachsenden Rohstoffen besteht und auf die Hülle ein Laminat aufgebracht ist. Das Laminat kann beispielsweise aus Glasvlies, Glasgewebe, Metallfolie oder schwerentflammbarem Papier bestehen. Die Herstellung erfolgt bevorzugt über Extrusion, wobei gleichzeitig beim Extrudieren das Laminat auf die Hülle mit aufgebracht wird. Nachteilig an diesem Stand der Technik ist insbesondere, dass eine andere Form als die Plattenform praktisch nicht herstellbar ist, da die aufgebrachten Dämmschichten nicht für eine andere Form, beispielsweise eine gebogene Form, geeignet bzw. ausgelegt sind und sich daher nach kürzester Zeit ablösen würden und/oder die flache Form wieder einnehmen würden. Das Problem einer stabilen Formgebung bei nahezu beliebiger ausgewählter Form über die gesamte Haltbarkeitsdauer der Dämmung ist somit nicht gelöst. Die FR 2 801 367 A offenbart eine gebogene Isolationsstruktur.

Die US-A-3 264 165 beschreibt eine Isolierung, umfassend ein elastisches permeables Isolierungsmaterial, enthaltend ein Gas mit guten Isolationseigenschaften, wobei ein verschlossener Beutel aus dünnem flexiblen Material das Isolierungsmaterial umgibt, das Gas im Isolierungsmaterial einschließt und ein elastisches Schaummaterial, das an die gesamte Oberfläche des Beutels gebunden ist und die Oberfläche des Beutels vollständig umgibt.

Weiterhin bezieht sich die US-A-4 340 630 auf ein Isolierungsmaterial, das ein faserartiges Material umfasst sowie ein Gas mit niedriger Leitfähigkeit, das in einer Hülle eingeschlossen ist, die aus einem oder mehreren heißverklebten Laminatlagen hergestellt ist. Das faserartige Material ist teilweise zur inneren Oberfläche der Hülle mit Klebemitteln festgemacht. Die Laminatlagen umfassen jeweils mindestens 2 thermoplastische Filme, die in Längsrichtung mit Glasfasern verstärkt sind, die mindenstens 2 Vol.-% der thermoplastischen Filme umfassen.

Allgemein bekannt sind gattungsfremd außerdem textile Werkstoffe aus Kunststoffen, d.h. organischen Polymeren.

Die Aufgabe der Erfindung besteht darin, einen wärmedämmenden Dämmkörper mit verbesserter Ausgestaltung vorzuschlagen, der zudem in einfacher Weise herstellbar ist. Insbesondere soll der Dämmkörper auch zum Dämmen bzw. Isolieren von beliebig dreidimensional geformten Körpern einsetzbar sein.

Diese Aufgabe wird durch einen wärmedämmenden Dämmkörper mit den Merkmalen gemäß Patentanspruch 1 bzw. durch ein Verfahren zum Herstellen eines Dämmkörpers mit den Merkmalen gemäß Patentanspruch 12 gelöst. Vorteilhafte Ausgestaltungen sind Gegenstand von abhängigen Ansprüchen.

Insbesondere wird ein wärmedämmender Dämmkörper bereitgestellt mit
- einer Dämmkörperwandung und
- einem von zumindest einem Teil der Dämmkörperwandung umschlossenen Zwischenraum, wobei der Zwischenraum zu einem Bereich außerhalb der Dämmkörperwandung gas- und/oder flüssigkeitsdicht abgeschlossen ist,
   dadurch gekennzeichnet, dass
- die Dämmkörperwandung eine gas- und/oder flüssigkeitsdichte polymerhaltige Faserverbundstruktur enthält oder hieraus besteht, wobei unter einer polymerhaltigen Faserverbundstruktur Fasern verstanden werden, die in einer polymeren Matrix vorliegen und/oder diese enthalten,
wobei der Dämmkörper im endgefertigten Zustand starr ausgebildet ist.

Unter "Faserverbundstruktur" wird in der vorliegenden Erfindung eine beliebige Anordnung von Fasern, ob endlos oder nicht, verstanden, wobei die Fasern entweder in Form von Einzelfasern endlicher Länge und/oder Endlosfasern verwendet werden. Bevorzugt liegen die Fasern unter Ausbildung einer Faserstruktur in beliebiger Weise vor. Derartige Faserstrukturen sind beispielsweise Gewebe, Gelege, Gestricke, Gewirke, Vliese, Matten oder dergleichen.

Unter einer "polymerhaltigen Faserverbundstruktur" werden im Rahmen der Erfindung Fasern verstanden, die, in welcher Form auch immer, in einer polymeren Matrix vorliegen und/oder diese enthalten. Die polymere Matrix enthält ein oder mehrere Polymere oder besteht aus diesen.

Die polymerhaltige Faserverbundstruktur enthält daher Fasern aus beliebigem Material sowie ein oder mehrere Polymere oder besteht hieraus, ist gas- und/oder flüssigkeitsdicht, weist die geeigneten Dämmungseigenschaften auf und hat die gewählte Form und Abmessungen. Die Fasern sind derart in einer polymeren Matrix enthalten und/oder enthalten die polymere Matrix, so dass die Faserverbundstruktur gas- und/oder flüssigkeitsdicht wird. Die Polymere (polymere Matrix) können z.B. auf- und/oder in eine Faserstruktur, wie ein Gewebe, auf- und/oder eingebracht werden. Das oder die Polymere können beispielsweise die Zwischenräumen zwischen den Fasern, z.B. die Lücken in einem Gewebe oder Gestricke, füllen, diese können das Material der Fasern teilweise oder vollständig durchtränken und/oder diese imprägnieren, das Polymermaterial kann die Fasern ummanteln und/oder in gesamtem Umfang oder zumindest teilweise einbetten oder dergleichen. Die Fasern können auch in die polymere Matrix eingebracht werden. Die Verstärkung von Polymermaterialien mit Fasern ist in anderen technischen Gebieten bereits bekannt, so dass der Fachmann auf diese Technologie zurückgreifen kann.

Vorteilhaft ausgenutzt wird dabei, dass eine Dämmkörperwandung, enthaltend oder bestehend aus einer polymerhaltigen Faserverbundstruktur universeller einsetzbar und vorzugsweise auch dreidimensional verformbar und entsprechend formstabil ist.

Die Form und Größe des erfindungsgemäßen Dämmkörpers ist erfindungsgemäß nicht besonders beschränkt und umfasst jede Art von Formteil oder Körper, enthaltend ein oder mehrere Polymere sowie die Fasern, oder besteht hieraus, und ist in endgefertigtem Zustand starr. Form und Größe werden gemäß dem gewünschten Einsatzzweck ausgewählt.

Durch eine gas- und/oder flüssigkeitsdichte polymerhaltige Faserverbundstruktur, vorzugsweise ein Gewebe, Gewirk, Gelege oder gegebenenfalls auch andersartiges Textil, ist in dem Zwischenraum ein Unterdruck erzeugbar, welcher bestehen bleibt. Vorzugsweise schließt dazu die Dämmkörperwandung den Zwischenraum aus Sicht des Zwischenraums zu einem Bereich außerhalb der Dämmkörperwandung gas- und/oder flüssigkeitsdicht ab. Vorteilhafterweise sind derartige polymerhaltige Faserverbundstrukturen im endgefertigten Zustand starr, so dass optional auf den Einsatz eines Stützkörpers in dem Zwischenraum verzichtet werden kann.

Die vorzugsweise verwendete polymerhaltige Faserverbundstruktur der Dämmkörperwandung wird bzw. ist vorzugsweise zumindest aus einem textilen Körper, wie Gewebe, Gewirke, Gelege oder derart, hergestellt und mit einem oder mehreren Polymeren imprägniert oder enthält ein oder mehrere Polymere. Insbesondere der Einsatz von Polymeren als Bestandteil der Fasern und für die polymere Matrix, bietet eine Vielzahl von Vorteilen sowohl bei der Herstellung des Dämmkörpers als auch hinsichtlich dessen Formstabilität nach der Herstellung, da aus einer großen Anzahl an Polymeren ausgewählt und die Eigenschaften durch Auswahl der geeigneten Polymere maßgeschneidert eingestellt werden können.

Nach einer weiteren Ausführungsform der Erfindung ist die Dämmkörperwandung zumindest aus einer Außenwand und einer Innenwand ausgebildet, wobei der Zwischenraum zwischen der Außenwand und der Innenwand vorliegt. Besonders bevorzugt ist zumindest auf einem Teil der Innenseite und/oder Außenseite der Innenwand, bevorzugt auf der gesamten Außenseite und/oder Innenseite und gegebenenfalls auf zumindest einem Teil der Innenseite und/oder Außenseite der Außenwand, bevorzugt auf der gesamten Innen und/oder Außenseite (zu einem Bereich außerhalb der Dämmkörperwandung A), eine ein- oder mehrlagige gas- und/oder flüssigkeitsdichte Polymerfolie vorgesehen. Besonders bevorzugt ist die Polymerfolie auf der gesamten Außenseite der Außenwand und auf der gesamten Außenseite der Innenwand derart vorgesehen, dass die gesamte Oberfläche des Dämmkörpers umhüllt wird; ganz besonders bevorzugt ist die Polymerfolie auf der gesamten Innenseite der Außenwand und auf der gesamten Innenseite der Innenwand derart vorgesehen, dass der Zwischenraum vollständig eingehüllt wird und durch Vorsehen der Polymerfolie gas- und/oderflüssigkeitsdicht wird. Es sind auch andere Ausführungen mit der Polymerfolie möglich.

Durch zusätzliches Vorsehen einer gas- und/oder flüssigkeitsdichten Polymerfolie wird sichergestellt, dass der erfindungsgemäße Dämmkörper auch bei hohen Anforderungen an die Dämmung und langen Einsatzdauern seine Dämmwirkung im gewünschten Umfang aufrechterhält.

Die erfindungsgemäß eingesetzte Polymerfolie ist ebenfalls nicht besonders beschränkt, solange diese die geeignete Gas- und/oder Flüssigkeitsdichtigkeit bereitstellt und auf die polymerhaltige Faserverbundstruktur aufgebracht werden kann.

Vorteilhaft ermöglicht ein erfindungsgemäßer Dämmkörper eine Ausgestaltung, bei welcher der Zwischenraum einen Zwischenraumdruck aufweist, der aus Sicht des Zwischenraums zu einem Bereich außerhalb der Dämmkörperwandung geringer als ein Umgebungsdruck jenseits der Dämmkörperwandung ist. Somit wird in dem Zwischenraum ein Unterdruck, insbesondere ein Vakuum erzeugt, was eine schlechte Wärmeleitfähigkeit des Dämmkörpers bewirkt. Bevorzugt wird ein Dämmkörper zur Verfügung gestellt, bei dem der Zwischenraumdruck kleiner 0,75 bar, bevorzugt kleiner 0,5 bar, besonders bevorzugt kleiner 0,25 bar, insbesondere kleiner 0,1 bar ist.

Der Einsatz einer polymerhaltigen Faserverbundstruktur ermöglicht somit einen Dämmkörper bereitzustellen, bei dem die Dämmkörperwandung dreidimensional geformt ausgebildet ist. Die Form des Dämmkörpers ist beliebig. Bevorzugt ist es, wenn der Dämmkörper keine flache Form, wie eine Plattenform, einnimmt, sondern eine von der flachen Form abweichende Form aufweist, wie beispielsweise eine gebogene Form, insbesondere eine an eine Kugel angenäherte Form oder ein Ausschnitt hiervon oder eine an einen Hohlzylinder angenäherte Form oder Teile hiervon. Besonders bevorzugt ist eine Halbschale, die zumindest einen Zwischenraum aufweist.

In dem Zwischenraum ist vorzugsweise zumindest ein Stützkörper eingesetzt. Der Einsatz eines Stützkörpers im Zwischenraum ist insbesondere dann sinnvoll, wenn die Dämmkörperwandung dünnwandig ausgelegt ist. Vorteilhafterweise werden dann als Polymere insbesondere thermoplastischen Polymere verwendet. Prinzipiell können aber auch mehrere Stützkörper eingesetzt werden, zwischen welchen ein größerer Abstand besteht oder es kann auch ganz auf den Einsatz eines Stützkörpers verzichtet werden, wenn die Dämmkörperwandung aus einer polymerhaltigen Faserverbundstruktur besteht, welche im endgefertigten Zustand formstabil genug ist, einen Unterdruck im Zwischenraum zu halten, ohne sich dabei zu verformen bzw. ohne sich dabei in zu starkem Maße zu verformen. Ein Stützkörper kann insbesondere dann weggelassen werden, wenn der Anteil der Fasern in der Faserverbundstruktur hoch ist, beispielsweise mit einem Gehalt über etwa 50 Vol.-%" bezogen auf die polymerhaltige Faserverbundstruktur. Hierdurch resultiert durch die entsprechende Faserverstärkung bereits eine entsprechende Formstabilität des Dämmkörpers an sich.

Bevorzugt ist der Dämmkörper aus zwei oder mehr Dämmkörperkomponenten ausgebildet, wobei zumindest eine der Dämmkörperkomponenten an eine Kontur eines gegen Wärmeaustausch abzuschirmenden Körpers angepasst ist. Jede einzelne Dämmkörperkomponente kann einen erfindungsgemäßen vollständigen Dämmkörper darstellen, vorteilhafterweise mit entsprechend evakuiertem Zwischenraum sowie den geeignet ausgebildeten Dämmkörperwandungen, und können miteinander zu einem Gesamt-Dämmkörper verbunden werden oder die einzelnen Dämmkörperkomponenten können erst zusammengesetzt in einem Dämmkörper resultieren. Eine solche Ausgestaltung eines mehrteiligen Dämmkörpers ist beispielsweise zum Isolieren bzw. Dämmen einer Rohrleitung vorteilhaft. Einerseits wird eine gute Formstabilität und eine gute strukturelle Formung an einen zu isolierenden bzw. abzuschirmenden Körper aufgrund der harten Wandeigenschaften der Dämmkörperwand geboten. Andererseits wird gleichzeitig zusätzlich zu einer guten Verformbarkeit während der Herstellung im formstabilen Endzustand auch eine gute Isolierung des Innenraums ermöglicht.

Um einen derart steifen Dämmkörper an beispielsweise einer Rohrleitung diese vollständig umgebend anzuordnen, wird der Dämmkörper bevorzugt aus mehreren Dämmkörper-Komponenten gefertigt, beispielsweise zwei halbschalenförmigen Dämmkörper-Komponenten, welche dann einander gegenüberliegend außenseitig um eine beispielhafte Rohrleitung angeordnet und vorzugsweise miteinander verbunden werden. Zwischen den beiden Dämmkörper-Komponenten besteht im Idealfall nur ein Übergangsbereich, welcher so gering dimensioniert ist, dass effektiv keine oder nur vernachlässigbare Wärmebrücken entstehen.

Die Verbindung der einzelnen Dämmkörper-Komponenten zu einem Dämmkörper kann in beliebiger im Stand der Technik bekannter Art und Weise erfolgen, z.B. durch Zusammenstecken, unter Verwendung von Befestigungsmitteln, durch Kleben, Verschweißen oder in anderer Weise.

Bevorzugt wird ein Dämmkörper, bei dem die Dämmkörperwandung gasdicht für Luft, dicht für Fluide (beispielsweise superkritische Fluide) und/oder dicht für Flüssigkeiten ist, und vorzugsweise eine gas- und/oder flüssigkeitsdichte Polymerfolie auf zumindest einem Teil der Dämmkörperwandung aufgebracht ist. Eine in solcher Weise gestaltete Dämmkörperwandung bietet den Vorteil, dass Feuchtigkeit auch nicht über eventuelle Kapillarwirkungen oder sonstige Reaktionen mit dem Material der Dämmkörperwandung in den Zwischenraum eindringen kann. Auch ein Anlösen des Materials der Dämmkörperwandung wird so vorteilhaft verhindert. Solche Anordnungen ermöglichen den Einsatz auch bei großen Temperaturschwankungen, bei welchen anderenfalls in Verbindung mit Feuchtigkeit durch Frostsprengung bezeichenbare Schäden in dem Material der Dämmkörperwandung und/oder dem Material eines eventuell eingesetzten Stützkörpers entstehen könnten.

Vorteilhaft ist somit insbesondere ein Dämmkörper, bei dem die Dämmkörperwandung zumindest aus einer Außenwand und einer Innenwand ausgebildet ist, wobei der Zwischenraum zwischen zumindest der Außenwand und der Innenwand ausgebildet ist und zumindest auf einem Teil der Innen- und/oder Außenseite der Innenwand und gegebenenfalls zumindest auf einem Teil der Innen- und/oder Außenseite der Außenwand, vorzugsweise auf der gesamten Innen- und/oder Außenwand, beispielsweise der zur Umhüllung des gesamten Zwischenraums und/oder zur Umhüllung der gesamten Oberfläche des Dämmkörpers, eine ein- oder mehrlagige gas- und/oder flüssigkeitsdichte Polymerfolie vorgesehen ist.

Die Faserverbundstruktur der Dämmkörperwandung ist vorzugsweise aus einem gewebten, aus einem gewirkten und/oder aus einem gelegten Material hergestellt. Die Faserverbundstruktur der Dämmkörperwandung kann vorteilhaft unter Verwendung eines durch endlose Fasern und/oder einem mit Fasern endlicher Länge bestehenden Material hergestellt sein. Diesbezüglich ist somit die Fertigung der Faserverbundstruktur auf verschiedene Art und Weise umsetzbar.

Nach einer besonders bevorzugten erfindungsgemäßen Ausführungsform enthält der gegen Wärmeaustausch abschirmende Körper eine polymere Matrix, wobei die enthaltenen Fasern synthetischen oder natürlichen Ursprungs sind.

Das Material der Fasern ist im Rahmen der Erfindung nicht weiter beschränkt, sofern es die Wärmedämmung unterstützt oder zumindest nicht nachhaltig negativ beeinflusst und eine entsprechende Verstärkung der Dämmkörperwandung bereitstellt. Beispielhaft wird das Material der Fasern ausgewählt aus Glas, Keramik, Kohlenstoff, Metall, synthetischen oder natürlichen Polymeren, wobei die natürlichen Polymere, insbesondere ausgewählt sind aus Flachs, Hanf, Sisal oder dergleichen. Die Fasern können auch Mischungen von verschiedenen Materialien enthalten oder hieraus bestehen. Besonders bevorzugte Materialien für die Fasern sind ausgewählt aus ein oder mehreren Polymeren oder Glas.

Einsetzbar ist somit eine Vielzahl von Stoffen verschiedenster Art, welche für die Formgebung eine ausreichende Elastizität und/oder Biegbarkeit bieten und welche mittels eines Kunststoffs, insbesondere ein oder mehreren Polymeren, in eine starre feste Form verbringbar sind. Fasern aus Glas bieten eine besonders gute Wärmedämmung. Fasern aus Metall bieten zwar eine relativ schlechte Wärmedämmung, jedoch die Möglichkeit des gleichzeitigen Einsatzes als elektrischem Leiter zur Datenübertragung längs einer mit einem solchen Dämmkörpermaterial isolierten Strecke, beispielsweise Rohrleitung.

Die Fasern können Endlosfasern sein oder eine geeignete Länge aufweisen. Die Fasern können in der polymeren Matrix orientiert sein und eine Vorzugsrichtung aufweisen (unidirektional) oder die Fasern können in sämtliche Richtungen statistisch verteilt in der polymeren Matrix vorliegen. Weiterhin ist es ebenfalls möglich, dass die Fasern als Einzelfasern vorliegen oder eine beliebige vorgefertigte Form aufweisen und in dieser in die polymere Matrix einbezogen sind und/oder die polymere Matrix enthalten. Unter dieser vorgefertigen Form wird im Rahmen der Erfindung eine bevorzugte Ausführungsform der "Faserverbundstruktur" verstanden, die eine beliebige Anordnung von Fasern, ob endlos oder nicht, sein soll, die - wie bereits erläutert - miteinander unter Ausbildung einer textilen Struktur "verbunden" sind. Hierbei handelt es sich beispielsweise um Gewebe, Gelege, Gestricke, Gewirke, Vliese, Matten oder dergleichen. Diese vorgefertigten Faserformen sind erfindungsgemäß besonders bevorzugt, weil hierdurch ein größerer Zusammenhalt der Fasern zu einer höheren Stabilität des Dämmkörpers führt.

Es können auch ummantelte Fasern - entweder einzeln oder als Verbund - zum Einsatz kommen, die unter Verwendung einer polymeren Matrix zu einer erfindungsgemäßen polymerhaltigen Faserverbundstruktur ausgebildet werden können. Bei Verwendung von ummantelten Fasern kann der im Mantel der Fasern vorhandene Kunststoff ein anderer sein als der Kunststoff, welcher in der polymeren Matrix enthalten ist. Es kann aber auch derselbe Kunststoff für die Ummantelung und die polymere Matrix zum Einsatz kommen.

Der Gehalt der Fasern im Dämmkörper wird abhängig von den gewünschten Eigenschaften des Dämmkörpers ausgewählt. Ein hoher Gehalt an Fasern führt beispielsweise zu größerer Formstabilität, ein geringerer Anteil an Fasern führt zu einer größeren Elastizität des Dammkörpers.

Das oder die Polymere, die erfindungsgemäß als Material für die Fasern, die Polymerfolie und die polymere Matrix zum Einsatz kommen können sind im Rahmen der Erfindung nicht besonders beschränkt, sofern diese die geeigneten Eigenschaften für den Dämmkörper bereitstellen, wie eine ausreichende Dämmung sowie eine entsprechende Dichtigkeit gegenüber Gas und/oder Flüssigkeiten.

Das oder die Polymere für die Fasern, Polymerfolie und polymere Matrix können dieselben sein oder aus verschiedenen Polymeren ausgewählt werden. Die Polymere können entsprechend dem gewünschten Einsatzbereich und den Vorgaben bei der Dämmung sehr unterschiedlich ausgebildet sein. So können die Polymere vorzugsweise von thermoplastischer Natur sein. Bevorzugt thermoplastische Polymere sind Homo- oder Copolymere, z.B. solche auf Basis von Olefinen (Polypropylen (PP), Polyethylen (PE)) oder ausgewählt aus ein oder mehreren Copolymeren auf Basis von Olefinen, Polyestern (Polyethylenterephthalat (PET), Polybutylentherephthalat (PBT)), Polyamiden (z.B. PA 6, PA 12, PA 6.6 PA 4.6, PA 6.10, PA 6.12), Polyurethansystemen oder Polystrolcopolymeren (z:B. Acrylnitrilbutadien-Styrol (ABS), Styrol-Acrylnitril (SAN)).

Die Polymere können auch auf Basis von Rohölderivaten oder auf Basis nachwachsender Rohstoffe ausgewählt werden (Biopolymere, wie PLA (Polymilchsäure) etc.). Die Polymere können biologisch hoch beständig sein, oder biologisch abbaubar sein, mit definierter Abbaurate entsprechend den Lebensdaueranforderungen.

Der Dämmkörper kann vorteilhafterweise auch ein oder mehrere duromere Polymere enthalten. Beispielhafte, erfindungsgemäß besonders geeignete Duromere sind ungesättigte Polyesterharze (UP), Vinylesterharze (VE), hergestellt mit unterschiedlichen Arten von Katalysatoren und Beschleunigern, Polymere auf Basis von Epoxidharzen (EP) mit unterschiedlichen EP-Ausgangsprodukten und verschiedenen Härtersystemen (z. B. Anhydrid- oder Aminhärter oder deren Modifikationen), Phenolharze und deren Modifikationen, Melamin-Formaldehydharze und deren Modifikationen.

Selbstverständlich können auch Mischungen, Blends oder Legierungen mehrerer Polymere eingesetzt werden, um durch gezielte Auswahl der Polymere für den Anwendungsfall maßgeschneiderte Eigenschaften zur Verfügung zu stellen.

Besonders vorteilhafte Polymere, die in der polymeren Matrix verwendet werden sind Epoxidharze, Vinylesterharze oder Phenolharze. Für das Fasermaterial werden als Materialien besonders bevorzugt Glas oder Polymere eingesetzt. Die Polymere sind besonders bevorzugt ausgewählt aus Aramidfasern und Polypropylen, da sich hieraus besonders vorteilhafte Dämmungseigenschaften ergeben.

Die Polymerfolie ist besonders bevorzugt mehrlagig aufgebaut. Ganz besonders bevorzugt weist die Polymerfolie zumindest 2 Lagen, enthaltend ein oder mehrere thermoplastische Polymere, auf. Bevorzugt sind mehrlagige Verbundfolien, umfassend zumindest 2 Lagen, enthaltend thermoplastischen Kunststoff Bevorzugt wird zumindest eine Lage ausgewählt aus einem Polymer auf Basis eines Olefins, wie Polypropylen (PP) oder Polyethylen (PE), und zumindest eine weitere Lage ausgewählt aus einem Polyester, wie Polyethylenterephthalat (PET) oder Polybutylentherephthalat. Es können auch ein oder mehrere metallhaltige Lagen in die Folie einbezogen sein, wie Aluminum-haltige Lagen oder dergleichen

Die Polymere können vorteilhafterweise Zusätze enthalten, um spezielle Eigenschaften gezielt zu fördern oder einzustellen. So können die Polymere erfindungsgemäß bevorzugt flammgeschützt ausgerüstet sein, z.B. unter Zusatz von Al₂O₃ oder Al(OH)₃ oder anderen geeigneten Flammschutzmitteln, um einen entsprechenden Brandschutz oder eine Brandhemmung aufzuweisen. Auch ist es möglich, dass duromere Polymere eingesetzt werden, die bereits eine flammhemmende Wirkung aufgrund der Molekularstruktur zeigen, wie z.B. Phosphorhaltige Duromere.

Insbesondere derartige Dämmkörper, bei denen die Dämmkörperwandung je nach verwendeten Materialien beständig gegen eine Umgebungstemperatur in einem Bereich außerhalb der Dämmkörperwandung unterhalb 0°C, bevorzugt unterhalb -30°C, besonders bevorzugt unterhalb -100°C, ganz besonders bevorzugt unterhalb -200°C, insbesondere unterhalb -250 °C ist oder bevorzugt oberhalb +30°C ist, besonders bevorzugt oberhalb +60°C ist, ganz besonders bevorzugt oberhalb +80°C ist, insbesondere oberhalb +90°C ist, ermöglichen einen universellen Einsatz auch unter extremen Temperaturbedingungen.

Eigenständig vorteilhaft ist ein Verfahren zum Herstellen eines wärmedämmenden Dämmkörpers, bei dem eine Dämmkörperwandung derart ausgebildet wird, dass von zumindest einem Teil der Dämmkörperwandung ein Zwischenraum umschlossen wird und dass der Zwischenraum zu einem Bereich außerhalb der Dämmkörperwandung gas- und/oder flüssigkeitsdicht abgeschlossen ist, wobei die Dämmkörperwandung eine gas- und/oder flüssigkleitsdichte polyinerhaltige Faserverbundstruktur enthält oder hieraus besteht,
wobei unter einer polymerhaltigen Faserverbundstruktur Fasern verstanden werden, die in einer polymeren Matrix vorliegen und/oder diese enthalten.
mit den Schritten:
- Bereitstellen einer Faserverbundstruktur;
- Auf- und/oder Einbringen einer polymeren Matrix auf und/oder in die Faserverbundstruktur;
- vor oder nach dem Auf- und/oder Einbringen einer polymeren Matrix auf und/oder in die Faserverbundstruktur gegebenenfalls Aufbringen der Faserverbundstruktur auf eine gas- und/oder flüssigkeitsdichte Polymerfolie und
- Aushärten der polymerhaltigen Faserverbundstruktur unter Erhalt eines Dämmkörpers,
wobei der Dämmkörper im endgefertigten Zustand starr ausgebildet wird.

Die erfindungsgemäße polymerhaltige Faserverbundstruktur kann mittels bekannter Verfahren hergestellt werden, beispielsweise durch Aufbringen ein oder mehrerer Polymermaterialien auf die Fasern oder den Faserverbund oder Einbringen der Fasern oder des Faserverbunds in die polymere Matrix, woran sich ein Formgebungsverfahren anschließen kann.

Der Dämmkörper kann beispielsweise hergestellt werden, indem zunächst Fasern oder eine Faserverbundstruktur bereitgestellt wird, in/auf welche die polymere Matrix ein-/aufgebracht wird und gleichzeitig oder sich anschließend die endgültige Form erzeugt wird. Die Faserverbundstruktur kann vor Behandlung mit dem Polymermaterial bereits (vor-)geformt werden, sofern ein geeignetes Fasermaterial zum Einsatz kommt.

Eine weitere Möglichkeit der Herstellung des Dämmkörpers ist die Zugabe von Fasern bzw. der Faserverbundstruktur zu oder in eine polymere Matrix und gleichzeitige oder anschließende Formgebung zum gewünschten Dämmkörper.

Die polymerhaltige Faserverbundstruktur kann gemäß einer bevorzugten Ausführungsform der Erfindung auch mit einer Polymerfolie, die ein- oder mehrlagig ausgebildet sein kann, vorgesehen werden. Hierzu kann die Faserverbundstruktur auf die Polymerfolie oder die Polymerfolie auf die Faserverbundstruktur aufgebracht werden. Besonders bevorzugt wird die Faserverbundstruktur auf eine gas- und/oder flüssigkeitsdichte Polymerfolie aufgebracht. Hierzu werden die Fasern und/oder der Faserverbund auf die Polymerfolie beispielsweise gelegt oder in anderer Weise aufgebracht und anschließend die polymere Matrix auf und/oder in die Fasern oder den Faserverbund auf- und/oder eingebracht, z.B. durch Aufgießen, Aufsprühen, Eintauchen, unter Verwendung von Injektionstechnologien oder in anderer Weise. Das Aushärten der polymerhaltigen Faserverbundstruktur erfolgt dann vorzugsweise auf der Polymerfolie in derartiger Art und Weise, so dass die ausgehärtete polymere Matrix, enthaltend die Fasern und/oder den Faserverbund, auf der Polymerfolie entsprechend haftet, besonders bevorzugt die Polymerfolie vollflächig auf der Oberseite bedeckt. Die Polymermaterialien können in geeigneter Weise ausgewählt werden, um dies zu erreichen.

Zur Herstellung des Dämmkörpers bzw. Teilen des Dämmkörpers können herkömmliche Verfahren aus dem Stand der Technik herangezogen werden. Beispielsweise können die geeignet ausgewählten Polymere in üblicher Weise beispielsweise zu Folien, Vorformlingen oder Bauteilen verarbeitet werden. Beispielhaft einsetzbare Verfahren sind Umformverfahren, wie Thermoformvorgänge mit Vakuum und/oder Überdruck, Extrusionsverfahren (z. B. Vorformung als Schlauch), Spritzgießverfahren (z.B. Hinterspritzverfahren). Derartige Verfahren sind dem Fachmann bekannt, so dass keine weiteren Erläuterungen erforderlich sind.

Die polymerhaltigen Faserverbundstrukturen können vorzugsweise zur endgültigen Formgebung in einem Härteprozess durch Zuführung von Wärme oder sonstiger Energie (z.B. Mikrowelle, Induktion, mechanische Energie etc.) in die dreidimensionale Form überführt werden.

Alternativ dazu sind auch Herstellungsverfahren möglich, bei denen die polymerhaltige Faserverbundstruktur zum Ausformen der Dämmkörperwandung durch Laminieren und/oder Harzinjektionstechnologien in eine dreidimensionale Form gebracht wird. Beispielhafte Verfahren sind Infusionstechniken, wie Resin Transfer Moulding (RTM), VARI (Vaccum Assisted Resin Infusion), VARTM (Vaccum Assisted Resin Transfer Moulding), VAP (Vaccum Assisted Process) und MVI (Moulding By Vacuum Infusion). Diese Verfahren sind beispielsweise beschrieben in Flemming, M.; Ziegmann, G.; Roth, S.: Faserverbundbauweisen - Fertigungsverfahren mit duroplastischer Matrix, Springer-Verlag, Berlin-Heidelberg 1999. Weiterhin kann auch eine Handimprägnierung der Faserverbundstruktur verwendet werden, oder es kann von vorimprägnierten Fasern (z.B. Prepregs) oder sonstigem Halbzeug ausgegangen werden, welche/welches dann in bekannter Art und Weise in eine polymere Matrix einbezogen wird/werden.

Dies ermöglicht insbesondere, dass Fasern oder ein Fasern aufweisender Verbund in eine entsprechende dreidimensionale Form überführt werden kann.

Zur dreidimensionalen Ausformung der Faserverbundstruktur kann beispielsweise auch auf eine Stempel- und Matrizenanordnung zurückgegriffen werden.

Neben einer optionalen Ausgestaltung mit beispielsweise einer flächigen Wandung aus einem anderen Material und einer entsprechend geformten Wandung aus der erfindungsgemäßen Faserverbundstruktur werden jedoch besonders bevorzugt dreidimensionale Dämmkörper, deren Dämmkörperwandung vollständig aus der polymerhaltigen Faserverbundstruktur gefertigt ist, erfindungsgemäß zur Verfügung gestellt.

Besonders bevorzugt wird erfindungsgemäß ein textiles Faserverbundstrukturmaterial verwendet, das heißt insbesondere ein Dämmkörper erzeugt, bei dem die Faserverbundstruktur der Dämmkörperwandung gewebt, gewirkt und/oder gelegt wird. Derartige textile Faserverbundstrukturen bieten einerseits eine sehr gute Verformbarkeit bei der Herstellung des Dämmkörpers und andererseits nach der Herstellung und dem Aushärten eine sehr gute Formstabilität.

Zur Erhöhung der Formstabilität und Verbesserung der Haltbarkeit kann die Faserverbundstruktur auch zusätzlich zumindest teilweise, bevorzugt vollflächig, mit einer ein- oder mehrlagigen gas- und flüssigkeitsdichten Polymerfolie versehen sein.

Besonders vorteilhaft ist erfindungsgemäß ein Verfahren mit den Schritten:
- Bereitstellen eines Zwischenraums unter Einsetzen zumindest eines Stützkörpers,
- Umhüllen des Zwischenraums mit einer gas- und/oder flüssigkeitsdichten Polymerfolie;
- Evakuieren des Zwischenraums;
- gas- und/oder flüssigkeitsdichtes Verschließen der Polymerfolie;
- Aufbringen der Faserverbundstruktur (ohne polymere Matrix) auf zumindest einen Teil der Polymerfolie;
- Auf- und/oder Einbringen der polymeren Matrix auf und/oder in die Faserverbundstruktur und
- Aushärten der polymeren Matrix unter Erhalt eines Dämmkörpers.

Nach dieser besonders bevorzugten Verfahrensvariante wird ein Zwischenraum von einer gas- und/oder flüssigkeitsdichten Polymerfolie vollständig umhüllt. In diesem Zwischenraum befinden sich ein oder mehrere Stützkörper.

Ein Stützkörper kann beliebige Form und Größe, je nach dem Anwendungsfall, aufweisen und kann aus beliebigem Material hergestellt sein. Dieser kann beispielsweise aus einem geeigneten gas durchlässigen, bevorzugt leichten Material entsprechender Stabilität sein. Beispielsweise geeignet sind plattenfömige, gebogene oder in anderer Weise geformte Körper. Die Stützkörper können auch in Form einer Vielzahl von Einzelkörpern, wie beispielsweise Schaumstoffflocken oder dergleichen, vorliegen.

Nach Umhüllen des/der Stützkörper/s wird die Polymerfolie evakuiert und anschließend vakuumdicht verschlossen. Dies kann in beliebiger Weise erfolgen, beispielsweise unter Einsatz von Wärme und Verschmelzen oder Verschweißen der Polymerfolie oder in anderer Weise. Hierdurch wird zunächst ein gas- und/oder flüssigkeitsdichter Zwischenraum bereitgestellt, der vorgegeben durch die Form des Stützkörpers bereits eine geeignete Form aufweisen kann.

Hieran schließt sich das Aufbringen der polymerhaltigen Faserverbundstruktur an. Diese kann auf Teilen der Polymerfolie oder auf die gesamte Oberfläche der Polymerfolie aufgebracht werden. Besonders bevorzugt wird die Faserverbundstruktur, insbesondere die Fasern, auf die Polymerfolie aufgebracht und anschließend die polymere Matrix auf- bzw. eingebracht. Nach dem Aushärten der polymeren Matrix resultiert der Dämmkörper in der gewünschten Form und Größe.

Durch Aufbringen der Faserverbundstruktur und polymeren Matrix auf die Polymerfolie und anschließendes Aushärten der polymeren Matrix gelingt es, dass die Faserverbundstruktur auf der Polymerfolie hält und an dieser anhaftet. Ferner passt sich die polymerhaltige Faserverbundstruktur an die vom Stützkörper vorgegebene Form an und stabilisiert diese zusätzlich. Besonders bevorzugt werden die bereits beschriebenen ein- oder mehrlagigen Polymerfolien verwendet.

Die Faserverbundstruktur kann aber auch erst nach dem Aushärten auf die Polymerfolie aufgebracht werden. Dies kann in üblicher Weise, z.B. unter Verwendung eines Haftmittels, Vorsehen von Haftschichten oder dergleichen, erfolgen.

Die Form des Dämmkörpers wird durch die Form des Stützkörpers und/oder der Faserverbundstruktur bestimmt. So kann die Form des Stützkörpers bereits so ausgelegt sein, dass dieser die endgültige Form des Dämmkörpers vorsieht. Es kann auch auf den Einsatz eines Stützkörpers verzichtet werden, so dass die Faserverbundstruktur maßgebend für die Formgebung wird. Weiterhin kann auch ein flexibler Stützkörper Verwendung finden, welcher erst zusammen mit der Faserverbundstruktur die endgültige Form des Dämmkörpers ergibt.

Ermöglicht wird durch eine derartige konstruktive Anordnung, dass der Zwischenraumdruck im Zwischenraum entsprechend abgesenkt werden kann, zum Beispiel auf einen Wert kleiner 0,75 bar evakuiert werden kann, bevorzugt kleiner 0,5 bar, besonders bevorzugt kleiner 0,25 bar, insbesondere kleiner 0,1 bar. Je geringer der Zwischenraumdruck im Zwischenraum ist, desto geringer ist die Wärmeleitfähigkeit durch Konvektion innerhalb des Zwischenraums.

Insbesondere kann mit dem beschriebenen Verfahren ein gemäß den beschriebenen Ausführungen bevorzugter Dämmkörper auf einfache Art und Weise hergestellt werden.

Weiterhin eigenständig vorteilhaft ist auch eine Verwendung eines erfindungsgemäßen Dämmkörpers zum Abschirmen eines gegen Wärmeaustausch abzuschirmenden Körpers gegenüber einer Umgebungstemperatur in einem Bereich außerhalb der Dämmkörperwandung unterhalb 0°C, bevorzugt unterhalb -30°C, besonders bevorzugt unterhalb -100°C, ganz besonders bevorzugt unterhalb -200°C, insbesondere unterhalb -273°C oder bevorzugt oberhalb +30°C, besonders bevorzugt oberhalb +60°C, ganz besonders bevorzugt oberhalb +80°C, insbesondere oberhalb +90°C

Ein Ausführungsbeispiel wird nachfolgend anhand der Zeichnung näher erläutert. Es zeigen:
- Fig. 1: eine Seitenansicht einer Anordnung aus einem abzuschirmenden Körper, welcher von einem bevorzugten einteilig ausgestalteten Dämmkörper umgeben ist, wobei einzelne Dämmkörperlagen zu Veranschaulichungszwecken teilweise weggeschnitten dargestellt sind;
- Fig. 2: eine stirnseitige Schnittansicht durch die Anordnung gemäß Fig. 1;
- Fig. 3: eine stirnseitige Ansicht eines über eine Rohrleitung geschobenen Dämmkörpers gemäß der Darstellung aus Fig. 2;
- Fig. 4: eine stirnseitige Schnittansicht einer weiteren erfindungsgemäßen Ausführungsform eines Dämmkörpers, der über eine Rohrleitung geschoben ist und
- Fig. 5: eine stirnseitige Schnittansicht noch einer weiteren erfindungsgemäßen Ausführungsform eines Dämmkörpers, der über eine Rohrleitung geschoben ist.

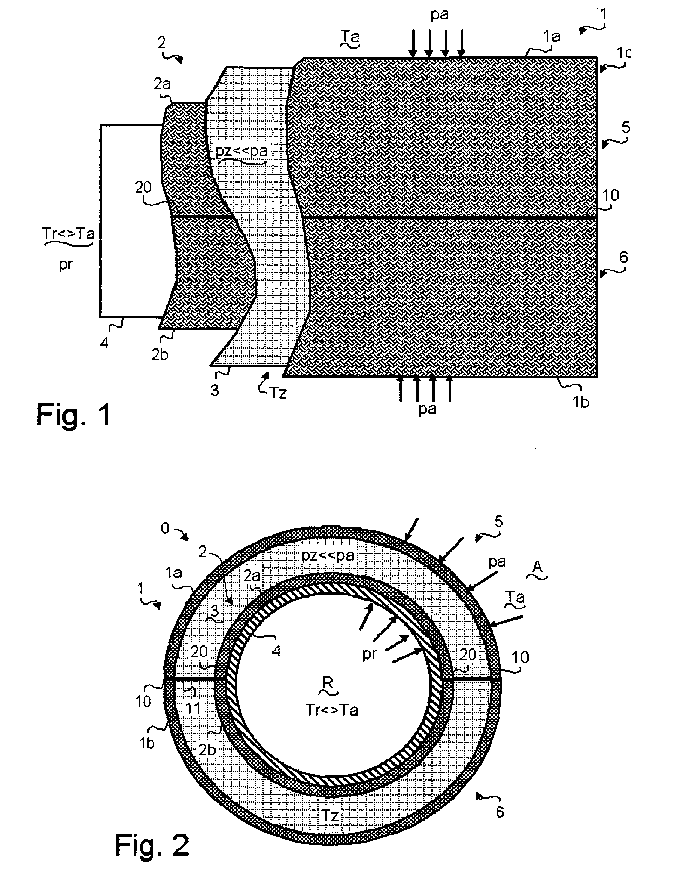

Wie aus Fig. 1 - 5 ersichtlich, besteht ein bevorzugter Dämmkörper 0 aus zwei Dämmkörper-Komponenten 5, 6, welche um einen abzuschirmenden Körper 4 herum angeordnet sind. Die Dämmkörper-Komponenten 5, 6 bestehen dabei im gezeigten Beispielfall aus einem starren Material, welches dreidimensional geformt ist und durch die Untergliederung in zwei oder mehr eigenständige Dämmkörper-Komponenten 5, 6 auch um einen dreidimensional geformten Körper 4 angeordnet werden können.

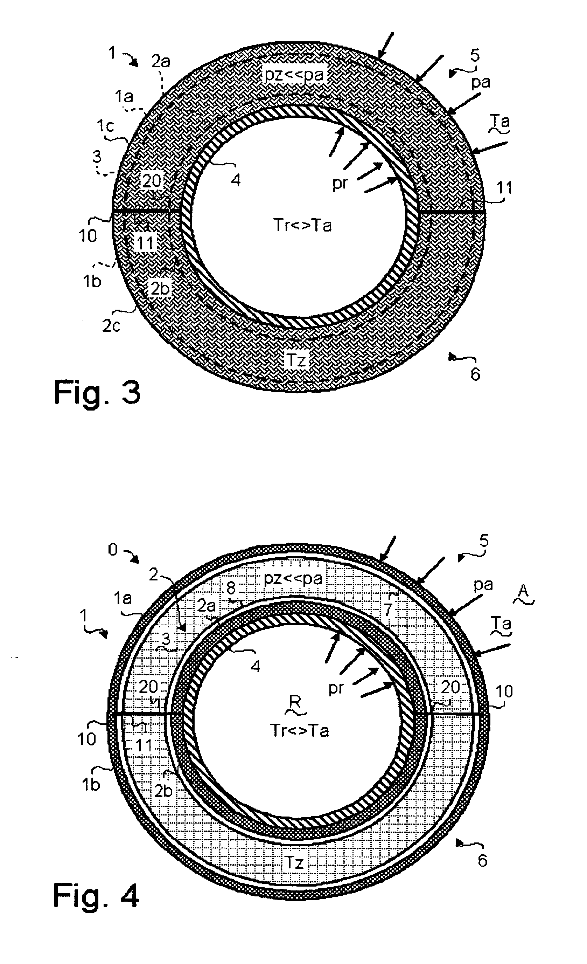

Wie insbesondere aus Fig. 2 und Fig. 3 gut ersichtlich ist, besteht die erste Dämmkörper-Komponente 5 des Dämmkörpers 0 aus einem ersten Innenwandteil 2a und einem ersten Außenwandteil 1a als zwei Dämmkörperwandungen 1, 2, welche voneinander beabstandet angeordnet sind. Über das erste Innenwandteil 2a und das erste Außenwandteil 1 a und zwischen diesen ausgebildete seitliche bzw. stirnseitige Wände 10, 20, 1c ist ein Zwischenraum 3 vollständig umschlossen ausgebildet. Vorzugsweise sind sowohl das erste Innenwandteil 2a, das erste Außenwandteil 1 a als auch die seitlichen und stirnseitigen Wände 10, 20, 1c jeweils aus einem polymerhaltigen Faserverbundmaterial ausgebildet, welches gas- und/oder flüssigkeitsdicht und formstabil ist. Dadurch wird einerseits ein evakuierbarer oder zumindest teilweise evakuierbarer Zwischenraum als der Zwischenraum 3 geschaffen und andererseits eine Formstabilität ermöglicht, welche auch dreidimensionale Ausgestaltungen des Dämmkörpers 0 zulässt.

Unter gasdicht wird dabei ein Gebilde, Formteil oder eine Struktur verstanden, welche im Endfertigungszustand insbesondere Luft oder je nach umgebendem Gas auch andere Gase am Durchtritt hindert. Insbesondere ist darunter zu verstehen, dass auch im Falle einer Druckdifferenz zwischen einem Zwischenraumdruck pz im Zwischenraum 3 und einem Umgebungsdruck pa außerhalb des Dämmkörpers 0 (Außenraum A) bzw. einem Umgebungsdruck pr innerhalb des Dämmkörpers 0 (Innenraum R) ein gasdichter Zustand der Dämmkörperwandung 1, 2 erhalten bleibt. Je nach Anwendungszweck und Höhe der Druckdifferenz sind die Anforderungen zum Erhalten der Gasdichtigkeit entsprechend hoch.

Eine weitere besonders bevorzugte Ausführungsform der Erfindung ist in Fig. 4 dargestellt. Hier ist auf der Innenseite der Innenwand 2 und auf der Innenseite der Außenwand 1 jeweils eine ein- oder mehrlagige gas- und/oder flüssigkeitsdichte Polymerfolie 7, 8 aufgebracht. Die Polymerfolie 7, 8 ist auf der Innenseite des ersten Außenwandteils 1a und auf der Innenseite des ersten Innenwandteils 2a der ersten Dämmkörper-Komponente 5 und auf der Innenseite des zweiten Außenwandteils 1b und auf der Innenseiteseite des zweiten Innenwandteils 2b der zweiten Dämmkörper-Komponente 6 jeweils vollflächig vorgesehen. Die Polymerfolie 7,8 trägt zur Verbesserung der Dämmungseigenschaften und Formstabilität bei. Die Polymerfolie 7, 8 kann den gesamten Zwischenraum 3 einhüllen und diesen gas- und/oder flüssigkeitsdicht einschließen. Beispielsweise kann die Polymerfolie 7, 8 dieselbe Folie sein, die an den Enden verbunden und abgedichtet wird, um den Zwischenraum 3 zu verschließen (nicht gezeigt). Hieraus resultiert ein vollständig von der Polymerfolie 7, 8 umhüllter Zwischenraum 3, der gegebenenfalls evakuiert werden kann. Die Dämmkörper-Komponenten 5, 6 können jeweils eigenständig einen von der Polymerfolie 7, 8 umhüllten Zwischenraum 3 aufweisen (je ein Zwischenraum in der Dämmkörper-Komponente 5 und 6) oder diese können miteinander verbunden einen gemeinsamen Zwischenraum 3 aufweisen.

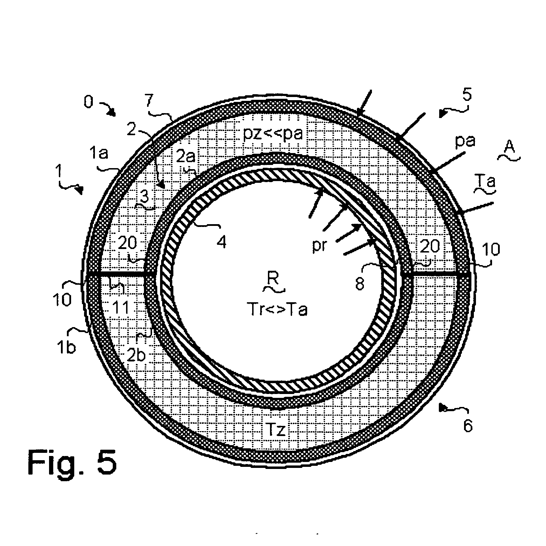

Die Polymerfolie 7, 8 kann sich auch an anderer Stelle im Dämmkörper 0 befinden. So ist insbesondere aus Fig. 5 ersichtlich, dass auf die Außenseite der Innenwand 2 und auf die Außenseite der Außenwand 1 eine ein- oder mehrlagige gas- und/oder flüssigkeitsdichte Polymerfolie 7, 8 aufgebracht ist. Diese trägt wieder zur Verbesserung der Dämmungseigenschaften und Formstabilität bei. Selbstverständlich sind erfindungsgemäß auch andere Anordnungen der Polymerfolien 7, 8 als die gezeigten Ausführungsformen möglich.

Für eine Wärmedämmung, insbesondere Wärmeisolierung wird der Zwischenraumdruck pz bei der Herstellung der Dämmkörper-Komponenten 5, 6 vorzugsweise auf einen Wert kleiner 0,75 bar abgesenkt. Besonders bevorzugt sind jedoch geringere Druckwerte des Zwischenraumdrucks pz sehr klein gegenüber dem Umgebungsdruck pa, pr mit Druckwerten des Zwischenraumdrucks pz kleiner 0,5 bar, kleiner 0,25 bar und insbesondere kleiner 0,1 bar. Entsprechend wird der hier vorzugsweise eingesetzte Faserverbund bei dessen Herstellung hinsichtlich Gewebefeinheit, Faserabstand, Materialauswahl etc. abhängig von der zu haltenden Druckdifferenz dimensioniert und ausgewählt.

Bei der dargestellten Ausführungsform umgibt der Dämmkörper 0 ein Rohr als den abzuschirmenden Körper 4 aus einem formstabilen und dichten Werkstoff. Von einer Seite aus Sicht des Zwischenraums 3 jenseits des Innenwandteils 2a, gegebenenfalls unter Vorsehen einer zusätzlichen Polymerfolie 8, wie in Fig. 4 gezeigt, kann entsprechend aufgrund einer anliegenden Rohrwandung des Rohres mit einem dortigen Umgebungsdruck pr kein Gas in den Zwischenraum 3 einströmen. Hingegen liegt von einer Außenseite, das heißt aus Sicht des Rohrs 4 jenseits des Dämmkörpers 0 ein Umgebungsdruck pa an, welcher in vielen Anwendungsfällen dem üblichen Luftdruck an der Erdoberfläche entspricht.

Vorzugsweise ist, wie dargestellt, auch die zweite Dämmkörper-Komponente 6 entsprechend aus einem zweiten Innenwandteil 2b, einem zweiten Außenwandteil 1b und diese verbindend seitlichen und stirnseitigen Wänden ausgebildet, wobei gegebenenfalls eine zusätzliche Polymerfolie 7, 8, aufgebracht auf der Innen- und/oder Außenseite des Innenwandteils 2b und/oder auf der Innen- und/oder Außenseite des Außenwandteils 1b, wie in Fig. 4 und 5 gezeigt, vorhanden sein kann. Im Falle von Dämmkörper-Komponenten 5, 6 zum Abschirmen eines z.B. rohrförmigen Körpers, können die beiden Dämmkörper-Komponenten 5, 6 als halbschalenförmige Strukturelemente gleich ausgebildet sein, die gegebenenfalls beide eine gas- und/oder flüssigkeitsdichte Polymerfolie 7, 8 aufweisen. Aus Gründen der Vereinfachung ist die Polymerfolie 7, 8 in Fig. 4 und5 einstückig dargestellt, diese kann aber auch mehrstückig ausgebildet sein, z.B. nur in den gezeigten jeweiligen halbschalenförmigen Strukturelementen ausgebildet sein, die dann miteinander verbunden werden. Insbesondere können die beiden Dämmkörper-Komponenten 5, 6 jeweils Umfangswände aufweisen, welche in Längsrichtung des Rohres flächig aneinanderliegende Seitenwände 10, 11, 20 ausbilden, die je nach Einsatzzweck ebenfalls eine zusätzliche gas- und/oder flüssigkeitsdichte Polymerfolie (nicht gezeigt) aufweisen können oder nicht. Optional können die flächigen Seitenwände 10, 11, 20 der Dämmkörper-Komponenten 5, 6 mit beispielsweise einer Nut und einer Feder derart strukturiert ausgebildet sein, dass die eine der Dämmkörper-Komponenten 5 in diesem Bereich mit derartigen Strukturelementen beim Zusammensetzen in das komplementäre Strukturelement der anderen Dämmkörper-Komponente 6 eingreifen kann. Es sind auch andere Verbindungs- bzw. Befestigungsmöglichkeiten denkbar.

Neben derart einfach konstruierten und im Wesentlichen halbschalenförmigen Dämmkörper-Komponenten 5, 6, welche einen Dämmkörper 0 mit Dämmkörperwandungen 1, 2 sowie dazwischen einem Zwischenraum 3 ausbilden und gegebenenfalls auf der Außenseite und/oder Innenseite der Innenwand 2 und/oder gegebenenfalls auf der Außenseite und/oder Innenseite der Außenwand 1 eine zusätzliche Polymerfolie 7 und 8 aufweisen, können derartige Dämmkörper 0 prinzipiell aber auch flächig und somit sich im Wesentlichen zweidimensional erstreckend oder auch in beliebigen anderen dreidimensionalen Strukturformen ausgebildet werden. Nicht flächige Formen sind jedoch erfindungsgemäß bevorzugt.

Vorteilhafterweise kann ein derartiger Dämmkörper 0 eingesetzt werden, um einen ersten und einen zweiten Raumbereich voneinander zu trennen, zwischen welchen ein sehr hoher Temperaturunterschied herrscht. So kann eine Temperatur Tr innerhalb des abzuschirmenden Körpers 4 und/oder die Temperatur des abzuschirmenden Körpers 4 selber, sehr niedrig oder sehr hoch sein, wie beispielsweise beim Abschirmen einer Rohrleitung zum Transport flüssigen Stickstoffs oder von heißen Gasen oder Flüssigkeiten. Dies ermöglicht eine Dämmung gegenüber Temperaturen unterhalb -30°C, -100°C oder sogar bis in den Bereich des absoluten Nullpunkts der Temperatur. Auch kann die Temperatur Tr des abzuschirmenden Körpers 4 höher als die Umgebungstemperatur Ta sein, so dass auch eine Dämmung gegenüber hohen Temperaturen, beispielsweise von über +60°C bis zu +90°C ermöglicht wird. Eine besonders gute Wärmedämmung wird dadurch erzielt, dass ein Wärmetransport durch den Zwischenraum 3 aufgrund des in diesem herrschenden Unterdrucks sehr gering ist.

Optional kann in dem Zwischenraum 3 anstelle eines Vakuums oder eines Rest-Luftgehalts auch ein Gas außer Umgebungsluft eingefüllt sein.

Das Material der im gezeigten Beispielfall eingesetzten polymerhaltigen Faserverbundstruktur ist vorzugsweise so gewählt, dass die Dämmkörperwandung 1, 2 in Form der Innenwand 2 bzw. der Außenwand 1 auch gegenüber anderen Stoffen als gasförmigen Stoffen dicht ist. Insbesondere sollte auch ein Fluid oder eine Flüssigkeit nicht auf die Substanz oder die Struktur der Dämmkörperwandung 1, 2 einwirken können. Gegebenenfalls wird der Einsatzzweck bezüglich der Umgebungsbedingungen entsprechend den erwarteten Umgebungsbedingungen durch eine geeignete Materialauswahl und/oder nachfolgende Behandlung, insbesondere Oberflächenbeschichtung der Dämmkörperwandung 1, 2 berücksichtigt oder es kann eine entsprechend modifizierte Polymerfolie 7, 8 auf die Innenwand 2 (zum abzuschirmenden Körper 4 hin oder zum Zwischenraum 3 hin) und/oder Außenwand 1 (zur Umgebung A oder zum Zwischenraum3 hin), wie beispielsweise in Fig. 4 und 5 dargestellt, aufgebracht werden.

Im Fall beispielsweise sehr dünner Dämmkörperwandungen 1, 2, eines zwischen diesen sehr breiten Zwischenraums 3 und/oder sehr großer zu erwartender Druckdifferenzen zwischen dem Zwischenraumdruck pz und einem Umgebungsdruck pa, pr kann optional ein Stützkörper in dem Zwischenraum 3 eingesetzt sein, welcher die beiden Dämmkörperwandungen 1, 2 auf Abstand zueinander hält. Beispielsweise können die Seitenwände 10, 11, 20 in Form von Stützkörpern oder als Teil eines oder mehrerer Stützkörper ausgelegt sein. Die Stützkörper können auch in Form einer Vielzahl von Einzelkörpern, wie beispielsweise Schaumstoffflocken oder dergleichen, vorliegen. Vorteilhafterweise kann bei geeigneter dreidimensionaler Ausformung und geeigneter Dimensionierung der Dämmkörperwandungen 1, 2 sowie des Zwischenraums 3 optional jedoch auf einen Stützkörper in dem Zwischenraum 3 verzichtet werden, was vorteilhaft ist, da ein Stützkörper eine unerwünschte Wärmebrücke ausbilden kann.

Ein Stützkörper aus einem biegbaren oder verformbaren Material kann einfach dreidimensional verformt werden. Ein Stützkörper aus einem vorgeformten und formfesten Material kann hingegen verwendet werden, um daran die noch flexiblen Verbundfasern auf- bzw. anzulegen, danach durch die polymere Matrix zu verfestigen und eine innige Verbindung zu erzeugen.

Insbesondere ermöglicht eine faserverstärkte Struktur oder Faserverbundstruktur bei der Herstellung des Dämmkörpers 0 bzw. der beiden Dämmkörper-Komponenten 5, 6 auf einfache Art und Weise eine dreidimensionale Formgebung. Ein derartiges vorzugsweise textiles Material in Form einer Faserverbundstruktur zum Herstellen der Dämmkörperwandungen 1, 2 und vorzugsweise auch der stirnseitigen Wand 1c, 10, 11, 20 kann vorzugsweise gewebt, gewirkt oder gelegt werden. Zur dreidimensionalen Formgebung wird insbesondere ein gewebter oder ein gewirkter Faserverbund mittels beispielsweise einer Stempel- und Matrizenanordnung unter Einsatz von Wärme in die gewünschte dreidimensionale Struktur bzw. Form gedrückt. Beim Erkalten wird das Material des Faserverbunds wieder fest, so dass eine formstabile Faserverbundstruktur entsteht. Als Material zum Erzielen einer solchen Formstabilität wird vorzugsweise ein thermoplastisches Polymer oder eine Mischung von Thermoplasten eingesetzt, welche durch Erwärmung verformbar werden und nach dem Abkühlen wieder erstarren.

Alternativ kann die Formgebung mit einer gewünschten dreidimensionalen Form aber auch durch Laminieren erfolgen. Dazu wird vorzugsweise ein Gewebe, insbesondere ein gelegtes Gewebe, bei Normaltemperatur geformt und die Fasern des Faserverbunds werden mittels eines oder mehrerer flüssiger Kunststoffe, beispielsweise mittels Epoxidharz, umgossen, imprägniert, getränkt oder in ähnlicher Weise behandelt, so dass nach einem Aushärten eine formstabile dreidimensionale Struktur entsteht.

Zur Bereitstellung von Dämmkörpern 0 mit besonders hohen Anforderungen an die Dämmung kann zusätzlich eine entsprechend gas- und/oder flüssigkeitsdichte Polymerfolie 7, 8 vorgesehen werden, die auf Teilen oder der gesamten Oberfläche des Dämmkörpers 0 bzw. der Dämmkörper-Komponenten 5, 6 vollflächig aufgebracht sein kann. Besonders bevorzugt wird die Polymerfolie 7, 8 als Auskleidung des Zwischenraums 3 verwendet, um diesen gas- und/oder flüssigkeitsdicht zu bekommen. Besonders bevorzugt ist die Polymerfolie 7, 8 dieselbe Folie, die an ihren Enden abgedichtet wird, um so den Zwischenraum vollständig gas- und oder flüssigkeitsdicht zu umschließen.

Sofern solche Dämmkörper 0 bzw. Dämmkörper-Komponenten 5, 6 nicht in einem einzigen Arbeitsschritt mit den Dämmkörperwandungen 1, 2 und einem zwischen diesen befindlichen Zwischenraum 3 und gegebenenfalls einer zusätzlichen Polymerfolie 7, 8 geformt werden können, besteht prinzipiell auch die Möglichkeit, einzelne Komponenten separat zu fertigen. Beispielsweise können die Innenwandteile 2a und die davon seitlichen abstehenden seitlichen Wandteile 10, 11, 1c als eine Vorkomponente und die Außenwandteile 1a als eine weitere Vorkomponente hergestellt werden. In einem nachfolgenden Arbeitsgang kann die Polymerfolie 7, 8 aufgebracht werden, dann die separat gefertigten Vorkomponenten aneinander angesetzt und miteinander verbunden werden. Das Verbinden kann entsprechend wieder unter Einsatz von Wärme, das heißt durch Anschmelzen und anschließendes Erkalten, oder durch Einsatz flüssiger Kunststoffe, beispielsweise Epoxidharz, und deren nachfolgendem Aushärten oder in anderer Weise erzielt werden.

Ermöglicht wird somit ein Dämmkörper 0, welcher eine theoretisch beliebige dreidimensionale Formgebung ermöglicht, indem eine gas- und/oder flüssigkeitsdichte polymerhaltige Faserverbundstruktur, vorzugsweise in einem ersten Schritt entsprechend geformt und in einem zweiten Schritt ausgehärtet wird.

Die Figuren 1 bis 5 verdeutlichen nur beispielhaft mögliche Ausgestaltungen. Diese sind nicht beschränkend zu verstehen, sondern stellen lediglich Beispiele möglicher Ausführungsformen dar. Die Figuren 1 bis 5 sind nicht abschließend und damit auch nicht beschränkend im Hinblick auf den Schutzbereich erfindungsgemäß ausgeführter Dämmkörper. Andere Möglichkeiten der Anordnung der Dämmkörperwandungen, Anzahl und Ausformung der Zwischenräume, der Anordnung und Ausgestaltung der Polymerfolie und Anzahl und Gestaltung einzelner Dämmkörper-Kompnenten sind denkbar.

### Bezugszeichenliste

- 0: Dämmkörper
- 1: Dämmkörper-Außenwandung
- 1a: erstes Außenwandteil
- 1b: zweites Außenwandteil
- 1c: Seitenwand
- 2: Dämmkörper-Innenwandung
- 2a: erstes Innenwandteil
- 2b: zweites Innenwandteil
- 3: Zwischenraum
- 4: abzuschirmender Körper, Rohr
- 5: erste Dämmkörper-Komponente
- 6: zweite Dämmkörper-Komponente
- 7, 8: ein- oder mehrlagige gas- und/oder flüssigkeitsdichte Polymerfolie
- 10, 11, 20: Seitenwände

- A: Außenraum
- pa, pr: Umgebungsdruck
- pz: Zwischenraumdruck pz
- R: Innenraum
- Ta: Umgebungstemperatur im Außenraum
- Tr: Temperatur innerhalb des abzuschirmenden Körpers

## Patentansprüche

1. Wärmedämmender Dämmkörper (0) mit
- einer Dämmkörperwandung (1, 2) und
- einem von zumindest einem Teil der Dämmkörperwandung (1, 2) umschlossenen Zwischenraum (3), wobei der Zwischenraum (3) zu einem Bereich (A, R) außerhalb der Dämmkörperwandung (1, 2) gas- und/oder flüssigkeitsdicht abgeschlossen ist,
wobei der Dämmkörper (0) im endgefertigten Zustand starr ausgebildet ist, **dadurch gekennzeichnet, dass**
- die Dämmkörperwandung (1, 2) eine gas- und/oder flüssigkeitsdichte polymerhaltige Faserverbundstruktur enthält oder hieraus besteht, wobei unter einer polymerhaltigen Faserverbundstruktur Fasern verstanden werden, die in einer polymeren Matrix vorliegen und/oder diese enthalten.

2. Dämmkörper (0) nach Anspruch 1, **dadurch gekennzeichnet, dass** die Dämmkörperwandung (1, 2) zumindest aus einer Außenwand (1) und einer Innenwand (2) ausgebildet ist, wobei der Zwischenraum (3) zwischen der Außenwand (1) und der Innenwand (2) ausgebildet ist und zumindest auf einem Teil der Innenseite und/oder Außenseite der Innenwand (2) und gegebenenfalls zumindest auf einem Teil der Innenseite und/oder Außenseite der Außenwand (1), vorzugsweise auf der gesamten Oberfläche der Innenwand (2) und/oder Außenwand (1), eine ein- oder mehrlagige gas- und/oder flüssigkeitsdichte Polymerfolie (7, 8) vorgesehen ist.

3. Dämmkörper (0) nach Anspruch 1 oder 2, **dadurch gekennzeichnet, dass** die Faserverbundstruktur der Dämmkörperwandung (1, 2) ausgewählt ist aus einem Gewebe, Gelege, Gestricke, Gewirke, Vlies, einer Matte und/oder Einzel- und/oder Endlosfasern, die in eine Richtung orientiert oder statistisch verteilt sind.

4. Dämmkörper (0) nach einem vorstehenden Anspruch, **dadurch gekennzeichnet, dass** das Material der Fasern ausgewählt ist aus Glas, Keramik, Kohlenstoff, Metall, synthetischen oder natürlichen Polymeren, wobei die natürlichen Polymeren ausgewählt sind aus Flachs, Sisal oder Hanf, oder Mischungen dieser.

5. Dämmkörper (0) nach einem vorstehenden Anspruch, **dadurch gekennzeichnet, dass** das oder die Polymere der Fasern, der Polymerfolie und der polymeren Matrix gleich oder verschieden sind und unabhängig voneinander ausgewählt sind aus ein oder mehreren Thermoplasten, Duromeren, Polymere auf Basis von Rohölderivaten oder Biopolymeren, insbesondere aus Homopolymeren oder Copolymeren auf Basis von Olefinen, Polyestern, Polyamiden, Polyurethanen, Polystryrolen, ungesättigten Polyesterharzen, Vinylesterharzen, Epoxidharzen, Phenolharzen oder Melamin-Formaldehydharzen, Polymilchsäure oder Mischungen dieser.

6. Dämmkörper (0) nach einem vorstehenden Anspruch, **dadurch gekennzeichnet, dass** der Zwischenraum (3) einen Zwischenraumdruck (pz) aufweist, der aus Sicht des Zwischenraums (3) zu einem Bereich (A, R) außerhalb der Dämmkörperwandung (1, 2) geringer als ein Umgebungsdruck (pa, pr) jenseits der Dämmkörperwandung (1, 2) ist.

7. Dämmkörper (0) nach Anspruch 6, **dadurch gekennzeichnet, dass** der Zwischenraumdruck (pz) kleiner 0,75 bar ist, bevorzugt kleiner 0,5 bar ist, besonders bevorzugt kleiner 0,25 bar ist, insbesondere kleiner 0,1 bar ist.

8. Dämmkörper (0) nach einem vorstehenden Anspruch, **dadurch gekennzeichnet, dass** die Dämmkörperwandung (1, 2) eine beliebige dreidimensionale Form aufweist, vorzugsweise die Form einer Halbschale aufweist.

9. Dämmkörper (0) nach einem vorstehenden Anspruch, **dadurch gekennzeichnet, dass** im Zwischenraum (3) zumindest ein Stützkörper vorliegt oder eingesetzt ist.

10. Dämmkörper (0) nach einem vorstehenden Anspruch, **dadurch gekennzeichnet, dass** der Dämmkörper (0) aus zwei oder mehr Dämmkörper-Komponenten ausgebildet ist, wobei zumindest eine der Dämmkörper-Komponenten an eine Kontur eines gegen Wärmeaustausch abzuschirmenden Körpers (4) angepasst ist, vorzugsweise die Form einer hohlen Halbschale aufweist.

11. Dämmkörper (0) nach einem vorstehenden Anspruch, **dadurch gekennzeichnet, dass** die Faserverbundstruktur der Dämmkörperwandung (1, 2) beständig gegen eine Umgebungstemperatur in einem Bereich (A, R) außerhalb der Dämmkörperwandung (1, 2) unterhalb 0°C ist, bevorzugt unterhalb -30°C, besonders bevorzugt unterhalb -100°C, ganz besonders bevorzugt unterhalb -200°C, insbesondere unterhalb -273°C oder bevorzugt beständig oberhalb +30°C ist, besonders bevorzugt oberhalb +60°C, ganz besonders bevorzugt oberhalb +80°C, insbesondere oberhalb +90°C.

12. Verfahren zum Herstellen eines wärmedämmenden Dämmkörpers (0), bei dem eine Dämmkörperwandung (1, 2) derart ausgebildet wird,
- dass von zumindest einem Teil der Dämmkörperwandung (1, 2) ein Zwischenraum (3) umschlossen wird und
- dass der Zwischenraum (3) zu einem Bereich (A, R) außerhalb der Dämmkörperwandung (1, 2) gas- und/oder flüssigkeitsdicht abgeschlossen ist, wobei
- die Dämmkörperwandung (1, 2) eine gas- und/oder flüssigkeitsdichte, polymerhaltige Faserverbundstruktur enthält oder hieraus besteht, wobei unter einer polymerhaltigen Faserverbundstruktur Fasern verstanden werden, die in einer polymeren Matrix vorliegen und/oder diese enthalten,
mit den Schritten:
- Bereitstellen einer Faserverbundstruktur;
- Auf- und/oder Einbringen einer polymeren Matrix auf und/oder in die Faserverbundstruktur;
- vor oder nach dem Auf- und/oder Einbringen einer polymeren Matrix auf und/oder in die Faserverbundstruktur gegebenenfalls Aufbringen der Faserverbundstruktur auf eine gas- und/oder flüssigkeitsdichte Polymerfolie (7, 8) und
- Aushärten der polymerhaltigen Faserverbundstruktur unter Erhalt eines Dämmkörpers (0),
wobei der Dämmkörper (0) im endgefertigten Zustand starr ausgebildet wird.

13. Verfahren nach Anspruch 12, **gekennzeichnet durch**:
- Bereitstellen eines Zwischenraums (3) unter Einsetzen zumindest eines Stützkörpers,
- Umhüllen des Zwischenraums (3) mit einer gas- und/oder flüssigkeitsdichten Polymerfolie (7, 8);
- Evakuieren des Zwischenraums (3);
- gas- und/oder flüssigkeitsdichtes Verschließen der Polymerfolie (7, 8);
- Aufbringen der Faserverbundstruktur auf zumindest einen Teil der Polymerfolie (7, 8);
- Auf- und/oder Einbringen der polymeren Matrix auf und/oder in die Faserverbundstruktur und
- Aushärten der polymeren Matrix unter Erhalt eines Dämmkörpers (0)

14. Verfahren nach Anspruch 12 oder 13, **dadurch gekennzeichnet dass** die Form des Dämmkörpers (0) durch die Form des Stützkörpers und/oder der Faserverbundstruktur erhalten wird.

15. Verfahren nach einem der Ansprüche 12 bis 14, **dadurch gekennzeichnet, dass** die Faserverbundstruktur der Dämmkörperwandung (1, 2) ausgewählt wird aus einem Gewebe, Gelege, Gestricke, Gewirke, Vlies, einer Matte und/oder Einzel- und/oder Endlosfasern, die in eine Richtung orientiert oder statistisch verteilt sind.

16. Verfahren nach einem der Ansprüche 12 bis 15, **dadurch gekennzeichnet, dass** das Material der Fasern ausgewählt wird aus Glas, Keramik, Kohlenstoff, Metall, synthetischen oder natürlichen Polymeren, wobei die natürlichen Polymeren ausgewählt sind aus Flachs, Sisal oder Hanf, oder Mischungen dieser.

17. Verfahren nach einem der Ansprüche 12 bis 16, **dadurch gekennzeichnet, dass** das oder die Polymere der Fasern, der Polymerfolie und der polymeren Matrix gleich oder verschieden ausgewählt werden und unabhängig voneinander ausgewählt werden aus ein oder mehreren Thermoplasten, Duromeren, Polymere auf Basis von Rohölderivaten oder Biopolymeren, insbesondere aus Homopolymeren oder Copolymeren auf Basis von Olefinen, Polyestern, Polyamiden, Polyurethanen, Polystryrolen, ungesättigten Polyesterharzen, Vinylesterharzen, Epoxidharzen, Phenolharzen oder Melamin-Formaldehydharzen, Polymilchsäure oder Mischungen dieser.

18. Verwendung eines Dämmkörpers nach einem der Ansprüche 1 bis 11 zum Abschirmen eines gegen Wärmeaustausch abzuschirmenden Körpers (4) gegenüber einer Umgebungstemperatur in einem Bereich (A, R) außerhalb der Dämmkörperwandung (1, 2) unterhalb 0°C, bevorzugt unterhalb -30°C, besonders bevorzugt unterhalb -100°C, ganz besonders bevorzugt unterhalb -200°C, insbesondere unterhalb -273°C oder bevorzugt oberhalb +30°C, besonders bevorzugt oberhalb +60°C, ganz besonders bevorzugt oberhalb +80°C, insbesondere oberhalb +90°C.

## Claims

1. A heat-insulating body (0), comprising
- an insulating body wall (1, 2), and
- an intermediate space (3) enclosed by at least a part of the insulating body wall (1, 2), wherein the intermediate space (3) is sealed in a gas-tight and/or liquid-tight manner towards a region (A, R) outside of the insulating body wall (1, 2), wherein the insulating body (0) is arranged in a rigid fashion in the finished state, **characterized in that**
- the insulating body wall (1, 2) contains a gas-tight and/or liquid-tight polymer-containing fibre composite structure, or consists thereof, wherein fibres are understood by a polymer-containing fibre composite structure which are present in a polymer matrix and/or contain the same.

2. An insulating body (0) according to claim 1, **characterized in that** the insulating body wall (1, 2) is formed by at least one outer wall (1) and an inner wall (2), wherein the intermediate space (3) is formed between the outer wall (1) and the inner wall (2), and a single-layer or multi-layer gas-tight and/or liquid-tight polymer film (7, 8) is provided at least on a part of the inside and/or outside of the inner wall (2), and optionally at least on a part of the inside and/or outside of the outer wall (1), preferably on the entire surface of the inner wall (2) and/or the outer wall (1).

3. An insulating body (0) according to claim 1 or 2, **characterized in that** the fibre composite structure of the insulating body wall (1, 2) is selected from a fabric, a laying, a knitted fabric, knitwear, a nonwoven fabric, a mat and/or individual and/or endless fibres which are oriented in one direction or statistically distributed.

4. An insulating body (0) according to a preceding claim, **characterized in that** the material of the fibres is chosen from glass, ceramics, carbon, metal, synthetic or natural polymers, wherein the natural polymers are chosen from flax, sisal or hemp, or mixtures thereof.

5. An insulating body (0) according to a preceding claim, **characterized in that** the polymer or polymers of the fibres, the polymer film and the polymer matrix are the same or different, and are selected independently from each other from one or several thermoplastic materials, thermosetting materials, polymers on the basis of crude oil derivatives or biopolymers, especially from homopolymers or copolymers on the basis of olefins, polyesters, polyamides, polyurethanes, polystyrenes, unsaturated polyester resins, vinyl ester resins, epoxy resins, phenolic resins or melamine-formaldehyde resins, polylactic acid, or mixtures thereof.

6. An insulating body (0) according to a preceding claim, **characterized in that** the intermediate space (3) has an intermediate space pressure (pz) which from the standpoint of the intermediate space (3) to a region (A, R) outside of the insulating body wall (1, 2) is lower than an ambient pressure (pa, pr) beyond the insulating body wall (1, 2).

7. An insulating body (0) according to claim 6, **characterized in that** the intermediate space pressure (pz) is lower than 0.75 bar, preferably lower than 0.5 bar, more preferably lower than 0.25 bar, especially lower than 0.1 bar.

8. An insulating body (0) according to a preceding claim, **characterized in that** the insulating body wall (1, 2) has any desired three-dimensional shape, preferably the shape of a half-shell.

9. An insulating body (0) according to a preceding claim, **characterized in that** at least one supporting body is present or inserted in the intermediate space (3).

10. An insulating body (0) according to a preceding claim, **characterized in that** the insulating body (0) is composed of two or more insulating body components, wherein at least one of the insulating body components is adjusted to a contour of a body (4) screening against heat exchange, preferably in form of a hollow half-shell.

11. An insulating body (0) according to a preceding claim, **characterized in that** the fibre composite structure of the insulating body wall (1, 2) is resistant to an ambient temperature in a region (A, R) outside of the insulating body wall (1, 2) beneath 0°C, preferably beneath -30°C, especially preferably beneath -100°C, especially more preferably beneath -200°C, especially beneath -273°C, or preferably continuously above +30°C, especially preferably above +60°C, especially more preferably above +80°C, especially above +90°C.

12. A method for producing a heat-insulating insulating body (0), in which an insulating body wall (1, 2) is arranged in such a way that
- an intermediate space (3) is enclosed by at least a part of the insulating body wall (1, 2), and
- the intermediate space (3) is sealed in a gas-tight and/or liquid-tight manner towards a region (A, R) outside of the insulating body wall (1, 2), wherein
- the insulating body wall (1, 2) contains a gas-tight and/or liquid-tight polymer-containing fibre composite structure, or consists thereof, wherein fibres are understood by a polymer-containing fibre composite structure which are present in a polymer matrix and/or contain said matrix,
comprising the following steps:
- providing a fibre composite structure;
- applying and/or introducing a polymer matrix on and/or in the fibre composite structure;
- optional application of the fibre composite structure onto a gas-tight and/or liquid-tight polymer foil (7, 8) before or after the application and/or introduction of a polymer matrix on and/or in the fibre composite structure, and
- curing of the polymer-containing fibre composite structure by obtaining an insulating body (0), wherein the insulating body (0) is rigidly arranged in the finished state.

13. A method according to claim 12, **characterized by**:
- providing an intermediate space (3) under insertion of at least one supporting body;
- surrounding of the intermediate space (3) with a gas-tight and/or liquid-tight polymer film (7, 8);
- evacuation of the intermediate space (3);
- gas-tight and/or liquid-tight closure of the polymer film (7, 8);
- application of the fibre composite structure onto at least a part of the polymer film (7, 8);
- application and/or introduction of the polymer matrix on and/or in the fibre composite structure, and
- curing of the polymer matrix by obtaining an insulating body (0).

14. A method according to claim 12 or 13, **characterized in that** the shape of the insulating body (0) is obtained by the shape of the supporting body and/or the fibre composite structure.

15. A method according to one of the claims 12 to 14, **characterized in that** the fibre composite structure of the insulating body wall (1, 2) is selected from a fabric, a laying, a knitted fabric, knitwear, a nonwoven fabric, a mat and/or individual and/or endless fibres which are oriented in one direction or statistically distributed.

16. A method according to one of the claims 12 to 15, **characterized in that** the material of the fibres is chosen from glass, ceramics, carbon, metal, synthetic or natural polymers, wherein the natural polymers are chosen from flax, sisal or hemp, or mixtures thereof.

17. A method according to one of the claims 12 to 16, **characterized in that** the polymer or polymers of the fibres, the polymer film and the polymer matrix are selected to be the same or different, and are selected independently from each other from one or several thermoplastic materials, thermosetting materials, polymers on the basis of crude oil derivatives or biopolymers, especially from homopolymers or copolymers on the basis of olefins, polyesters, polyamides, polyurethanes, polystyrenes, unsaturated polyester resins, vinyl ester resins, epoxy resins, phenolic resins or melamine-formaldehyde resins, polylactic acid, or mixtures thereof.

18. The use of an insulating body according to one of the claims 1 to 11 for screening of a body (4) to be screened against heat exchange in relation to an ambient temperature in a region (A, R) outside of the insulating body wall (1, 2) beneath 0°C, preferably beneath -30°C, especially preferably beneath -100°C, especially more preferably beneath -200°C, especially beneath -273°C, or preferably above +30°C, especially preferably above +60°C, especially more preferably above +80°C, especially above +90°C.

## Revendications

1. Élément isolant thermique (0) avec
- une paroi d'élément isolant (1, 2) et
- un espace intermédiaire (3) renfermé par au moins une partie de la paroi d'élément isolant (1, 2), l'espace intermédiaire (3) étant fermé de façon étanche aux gaz et/ou aux liquides par rapport à une zone (A, R) située à l'extérieur de la paroi d'élément isolant (1, 2),
l'élément isolant (0) étant conformé de façon rigide dans son état en fin de fabrication, **caractérisé en ce que** la paroi d'élément isolant (1, 2) contient une structure de fibres composite contenant un polymère étanche aux gaz et/ou aux liquides ou est composée de celle-ci, la structure de fibres composite contenant un polymère étant définie comme des fibres présentes dans une matrice de polymère et/ou contenant celle-ci.

2. Élément isolant (0) selon la revendication 1, **caractérisé en ce que** la paroi d'élément isolant (1, 2) se compose au moins d'une paroi extérieure (1) et d'une paroi intérieure (2), l'espace intermédiaire (3) étant formé entre la paroi extérieure (1) et la paroi intérieure (2) et une feuille de polymère (7, 8) étanche aux gaz et/ou aux liquides en une ou plusieurs couches étant prévue sur au moins une partie de la face intérieure et/ou de la face extérieure de la paroi intérieure (2) et éventuellement au moins sur une partie de la face intérieure et/ou de la face extérieure de la paroi extérieure de la paroi extérieure (1), de préférence sur toute la surface de la paroi intérieure (2) et/ou de la paroi extérieure (1).

3. Élément isolant (0) selon la revendication 1 ou 2, **caractérisé en ce que** la structure de fibres composite de la paroi d'élément isolant (1, 2) est choisie parmi un textile, une nappe, un tricot, un tissu de mailles, un non-tissé, une natte et/ou des fibres isolées et/ou sans fin, qui sont orientées dans une direction ou distribuées de façon statistique.

4. Élément isolant (0) selon l'une des revendications précédentes, **caractérisé en ce que** le matériau des fibres est choisi parmi le verre, la céramique, le carbone, le métal, des polymères de synthèse ou naturels, les polymères naturels étant choisis parmi le lin, le sisal ou le chanvre, ou des mélanges de ceux-ci.

5. Élément isolant (0) selon l'une des revendications précédentes, **caractérisé en ce que** le ou les polymères des fibres, du film de polymère et de la matrice de polymère sont identiques ou différents et sont choisis indépendamment les uns des autres parmi un ou plusieurs thermoplastiques, plastiques thermodurcissables, polymères à base de dérivés de pétrole ou biopolymères, en particulier parmi des homopolymères ou des copolymères à base d'oléfines, de polyesters, de polyamides, de polyuréthanes, de polystyrènes, de résines polyester insaturées, de résines vinylester, de résines époxy, de résines phénoliques ou de résines mélamine-formaldéhyde, d'acide polylactique ou de mélanges de ceux-ci.

6. Élément isolant (0) selon l'une des revendications précédentes, **caractérisé en ce que** l'espace intermédiaire (3) présente une pression d'espace intermédiaire (pz) qui est plus basse dans l'espace intermédiaire (3), par rapport à une zone (A, R) située à l'extérieur de la paroi de l'élément isolant (1, 2), qu'une pression ambiante (pa, pr) au-delà de la paroi d'élément isolant (1, 2).

7. Élément isolant (0) selon la revendication 6, **caractérisé en ce que** la pression dans l'espace intermédiaire (pz) est inférieure à 0,75 bar, de préférence inférieure à 0,5 bar, en particulier inférieure à 0,25 bar et notamment inférieure à 0,1 bar.

8. Élément isolant (0) selon l'une des revendications précédentes, **caractérisé en ce que** la paroi d'élément isolant (1, 2) présente une forme à trois dimensions quelconque, de préférence la forme d'une demi-coque.

9. Élément isolant (0) selon l'une des revendications précédentes, **caractérisé en ce qu'**au moins un élément de soutien est présent ou introduit dans l'espace intermédiaire (3).

10. Élément isolant (0) selon l'une des revendications précédentes, **caractérisé en ce que** l'élément isolant (0) est formé de deux ou plusieurs composants d'élément isolant, l'un au moins des composants d'élément isolant étant adapté à un contour d'un élément (4) à isoler pour empêcher les échanges thermiques, et présente de préférence la forme d'une demi-coque creuse.

11. Élément isolant (0) selon l'une des revendications précédentes, **caractérisé en ce que** la structure de fibres composite de la paroi d'élément isolant (1, 2) résiste à une température ambiante dans une zone (A, R) située en-dehors de la paroi d'élément isolant (1, 2) inférieure à 0°C, de préférence inférieure à -30°C, en particulier inférieure à -100°C, tout particulièrement inférieure à -200°C, notamment inférieure à -273°C ou résiste à une température de préférence supérieure à +30°C, en particulier supérieure à +60°C, tout particulièrement supérieure à +80°C, notamment supérieure à +90°C.

12. Procédé pour fabriquer un élément isolant thermique (0) dans lequel une paroi d'élément isolant (1, 2) est formée de telle manière que :
- au moins une partie de la paroi d'élément isolant (1, 2) renferme un espace intermédiaire (3) et
- que l'espace intermédiaire (3) soit fermé de façon étanche aux gaz et/ou aux liquides par rapport à une zone (A, R) située à l'extérieur de la paroi d'élément isolant (1, 2), la paroi d'élément isolant (1, 2) contenant une structure de fibres composite contenant un polymère étanche aux gaz et/ou aux liquides ou étant composée de celle-ci, la structure de fibres composite contenant un polymère étant définie comme des fibres présentes dans une matrice polymère et/ou contenant celle-ci,
comprenant les étapes de :
- préparation d'une structure de fibres composite ;
- application ou introduction d'une matrice polymère sur et/ou dans la structure de fibres composite ;
- avant ou après l'application ou l'introduction d'une matrice polymère sur et/ou dans la structure de fibres composite, application éventuelle de la structure de fibres composite sur une feuille de polymère (7, 8) étanche aux gaz et/ou aux liquides, et
- durcissement de la structure de fibres composite contenant un polymère pour obtenir un élément isolant (0),
l'élément isolant (0) étant conformé de façon rigide dans son état en fin de fabrication.

13. Procédé selon la revendication 12, **caractérisé par** les étapes suivantes :
- préparation d'un espace intermédiaire (3) en insérant au moins un élément de soutien,
- enveloppement de l'espace intermédiaire (3) avec une feuille de polymère (7, 8) étanche aux gaz et/ou aux liquides,
- création d'un vide dans l'espace intermédiaire (3),
- fermeture étanche aux gaz et/ou aux liquides de la feuille de polymère (7, 8),
- application de la structure de fibres composite sur au moins une partie de la feuille de polymère (7, 8),
- application et/ou introduction de la matrice polymère sur et/ou dans la structure de fibres composite et
- durcissement de la structure de fibres composite contenant un polymère pour obtenir un élément isolant (0).

14. Procédé selon la revendication 12 ou 13, **caractérisé en ce que** la forme de l'élément isolant (0) est obtenue par la forme de l'élément de soutien et/ou de la structure de fibres composite.

15. Procédé selon l'une des revendications 12 à 14, **caractérisé en ce que** la structure de fibres composite de la paroi d'élément isolant (1, 2) est choisie parmi un textile, une nappe, un tricot, un tissu de mailles, un non-tissé, une natte et/ou des fibres isolées et/ou sans fin, qui sont orientées dans une direction ou distribuées de façon statistique.

16. Procédé selon l'une des revendications 12 à 15, **caractérisé en ce que** le matériau des fibres est choisi parmi le verre, la céramique, le carbone, le métal, des polymères de synthèse ou naturels, les polymères naturels étant choisis parmi le lin, le sisal ou le chanvre, ou des mélanges de ceux-ci.

17. Procédé selon l'une des revendications 12 à 16, **caractérisé en ce que** le ou les polymères des fibres, du fil de polymère et de la matrice de polymère sont identiques ou différents et sont choisis indépendamment les uns des autres parmi un ou plusieurs thermoplastiques, plastiques thermodurcissables, polymères à base de dérivés de pétrole ou biopolymères, en particulier parmi des homopolymères ou des copolymères à base d'oléfines, de polyesters, de polyamides, de polyuréthanes, de polystyrènes, de résines polyester insaturées, de résines vinylester, de résines époxy, de résines phénoliques ou de résines mélamine-formaldéhyde, d'acide polylactique ou de mélanges de ceux-ci.

18. Utilisation d'un élément isolant selon l'une des revendications 1 à 11 pour isoler un élément (4) à isoler pour empêcher les échanges thermiques par rapport à une température ambiante dans une zone (A, R) située en-dehors de la paroi d'élément isolant (1, 2) inférieure à 0°C, de préférence inférieure à -30°C, en particulier inférieure à -100°C, tout particulièrement inférieure à -200°C, notamment inférieure à -273°C, ou de préférence supérieure à +30°C, en particulier supérieure à +60°C, tout particulièrement supérieure à +80°C, notamment supérieure à +90°C.
